# EUROPEAN PATENT SPECIFICATION

(11) **EP 3 840 156 B1**
(45) Date of publication and mention of the grant of the patent: **14.08.2024**
(21) Application number: 19217187.4
(22) Date of filing: 17.12.2019
(51) Int. Cl.: H01B 17/42

(54) **POLYMERIC HVDC INSULATION TUBE WITH AN EMBEDDED ELECTRODE**
POLYMERES HVDC-ISOLIERROHR MIT EINGEBETTETER ELEKTRODE
TUBE D'ISOLATION HVDC POLYMÈRE À ÉLECTRODE INTÉGRÉE

(43) Date of publication of application: 23.06.2021
(73) Proprietor: Hitachi Energy Ltd, 8050 Zürich (CH)
(72) Inventor: HJORTSTAM, Olof, 725 96 Västerås (SE); FRIBERG, Andreas, 174 62 Sundbyberg (SE); LARSSON, Mats, 72348 VÄSTERÅS (SE)
(74) Representative: Valea AB

(56) References cited:
- EP-A1- 1 167 959
- EP-A1- 3 142 205
- EP-A1- 3 142 206
- CN-A- 101 855 804
- DE-A1- 19 621 710
- US-A- 3 962 609
- US-A1- 2001 040 046
- US-A1- 2014 291 543

## Description

The present disclosure relates to the field of electric insulation. In particular, it relates to an insulating component having structures for improving the homogeneity of a surrounding electric field, with a view to reduce electric stress.

### BACKGROUND

Insulation components are used in a wide range of applications to separate electrically conducting objects at different potentials, so as to restrict current flows to conductors. Solid insulation components may have an additional function of maintaining a predefined relative distance or orientation of the objects, to absorb tensile, compressive, shear or torsional stress, or to transfer heat. Insulation components which define a channel, such as tubular-shaped components, may serve the further purpose of transporting fluids, such as gas or liquid flowing to or from an industrial process, circulating cooling media or the like. A complete path along which the fluid is to be transported may be defined by insulation components, or alternatively, a section of the path may be defined by insulation components while other sections, which are possibly less safety-critical, may pass through metallic, ceramic or polymeric conduits without verified insulating properties.

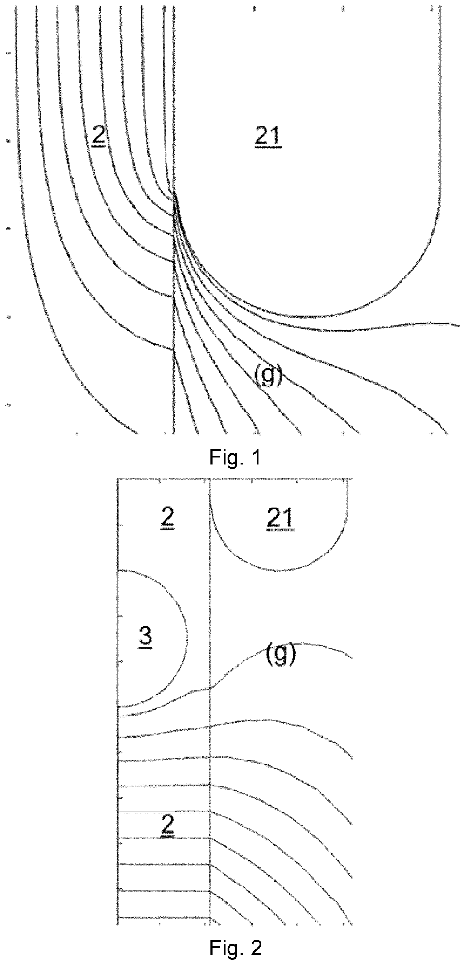

Highly non-homogenous field distributions have been observed or simulated around air-, gas- or liquid-immersed solid insulation components for non-oscillating voltage, which are commonly used in high-voltage direct current (HVDC) equipment. It is known that defective field homogeneity may translate into high electric stress, which increases the likelihood of partial discharge or breakdown and so makes the equipment less safe over its lifecycle. The present inventors have directed attention to the so-called triple point or triple junction, where a dielectric (the solid insulator) is joined to a conducting material (an object at an electric potential, such as a metallic fitting) in the presence of a gaseous or liquid dielectric. Figure 1 shows a pattern of equipotential lines for a cylindrically symmetric example geometry including a gas-immersed insulator 2 retained by a metallic fitting 21, which pattern has been obtained by a numerical simulation using a finite-element approach. A high density of equipotential lines, corresponding to a significant field concentration, is visible in the gas phase (g) near the triple point. Accordingly, one problem is to reduce or mitigate the field concentration in this region.

A similar problem is addressed by EP3142206, which discloses an insulating HVDC component with an embedded perforated field-control electrode.

DE 196 21 710 A1 discloses an insulator for installation in an HV switching plant having a body of hardened resin and at least one electrode cast into the body. The insulator comprises first and second objects having respective potentials and the electrodes are located near the second object.

CN 101 855 804 A relates to a partition insulator consisting of an essentially disc-shaped insulation body, comprising a fastening flange, preferably metallic, and at least one electrode that is preferably rotationally symmetrical and that passes through said insulating body in an axial manner. EP3142205A1 discloses a DC high-voltage insulator comprising a base body made of insulating material that runs around an insulator axis, at least one outer electrode that runs inside the base body and one inner electrode running inside the main body. US2001/040046A1 discloses a hollow high-voltage insulator, which has a cylindrical shaped insulating body in which electrodes are embedded along the entire axial length of the insulator.

### SUMMARY

In view of the foregoing, it is an object of the invention to propose a solid insulating component for which the surrounding electric field has an improved homogeneity. It is a particular object to reduce or mitigate a high field concentration at the triple point of the insulating component, especially in the gas phase.

The invention is defined by claim 1.

An insulating component for separating a first object at a first potential and a second object at a second potential is considered, wherein the first and second potentials differ by a non-zero non-oscillating voltage. The insulating component comprises an insulator on which an abutment surface can be identified. The abutment surface is adapted to rest against the first object. According to the present invention, the insulating component comprises a plurality of field-control electrodes inside the insulator in the vicinity of the abutment surface. When the field-control electrodes are maintained approximately at the first potential, the electric field concentration at the triple point becomes less pronounced and the electric stress is reduced.

The first aspect may have a field-homogenizing effect. To illustrate, figure 2 shows a pattern of equipotential lines for the example cylindrically symmetric geometry of figure 1, with the addition of a field-control electrode 3. According to the inventors' present understanding, the potential gradient along the axial direction of the insulating component is shifted some distance away from the first object by the field-control electrode which is at the first object's potential. Along the axial direction, therefore, the potential at the surface of the solid insulator remains approximately equal to the first potential in the vicinity of the first object, so that the transition from the first potential to the second potential is localized to a central portion of the solid insulator, away from the first object. Accordingly, the gas phase at the triple point will interface with the solid insulator and the first object while these bodies are at approximately equal electric potential.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

In particular, the non-oscillating voltage may be a DC voltage, such as a HVDC voltage. Two portions of a topologically connected item that are at different electric potentials, e.g., mutually insulated parts of switchgear, are to be regarded as different "objects" in the sense of the present claims. The insulator may be a solid insulator, which is non-liquid and non-gaseous; it may be massive and/or convex or it may have recesses, cavities, channels or other voids. The abutment surface is adapted to rest against the first object, e.g., by supporting, being supported by, suspending, being suspended from, being fastened or claimed or joined by a form-locked join to the first object. In particular, the abutment surface may transfer mechanical forces from the second object to the first object.

Regarding the expression "approximately at the first potential", it is noted that an analogous effect, though possibly weaker, is obtained if the field-control electrode is maintained at an electrode potential *Vₑ* between the first potential *V*₁ and the second potential *V*₂, as long as the electrode potential corresponds to an earlier point in the undisturbed transition from *V*₁ to *V*₂ (i.e. axially closer to the first object) than the actual location of the field-control electrodes. As an example, if a linear dependency is assumed and the field-control electrodes are located at 10% of the axial distance from the first body, then a field-homogenizing effect is obtained as soon as |*Vₑ* - *V*₁| < 0.1|*V*₂ - *V*₁|. Even though some embodiments have been summarized above, the claimed subject matter is defined in the attached claims.

### BRIEF DESCRIPTION OF THE DRAWINGS

Embodiments of the present invention will now be described by way of example, with reference to the accompanying drawings, on which:
figures 1 and 2 are plots of equipotential lines obtained, respectively, by numerical simulation of a prior art geometry and a geometry according to the invention;
figures 3 and 4 are axial and transverse sections, respectively, of a cylindrically shaped insulating component according to an embodiment, not covered by claims, which is shown received in opposite first and second end axial fittings;
figures 5 and 6 are transverse sections of insulating components according to two embodiments, not covered by claims, illustrating possible geometries of embedded field-control electrodes; figure 7 is a perspective view of a cylindrically shaped insulating component with a connection terminal extending from the field-control electrode to an axial surface of the component, according to an embodiment, not covered by claims,
figure 8 is an axial section of an insulating component according to an embodiment, not covered by claims, shown in axial abutment with a first object, wherein the insulating component has a central channel for conducting a fluid and directing it towards an orifice of the first object;
figure 9 shows an insulating component in abutment with flat surfaces of a first and second object;
figure 10 is an axial section of a cylindrically shaped insulating component according to the invention, which is shown together with an axial fitting adapted to receive the insulating component; and
figure 11 is a perspective view of an insulating component according to the invention.

### DETAILED DESCRIPTION

The invention will now be described more fully hereinafter with reference to the accompanying drawings, on which some embodiments are shown. It is recalled that these embodiments should not be construed as limiting; rather, these embodiments are provided by way of example so that this disclosure will be thorough and complete, and to fully convey the scope of the invention to those skilled in the art. Like numbers refer to like or corresponding elements throughout the description.

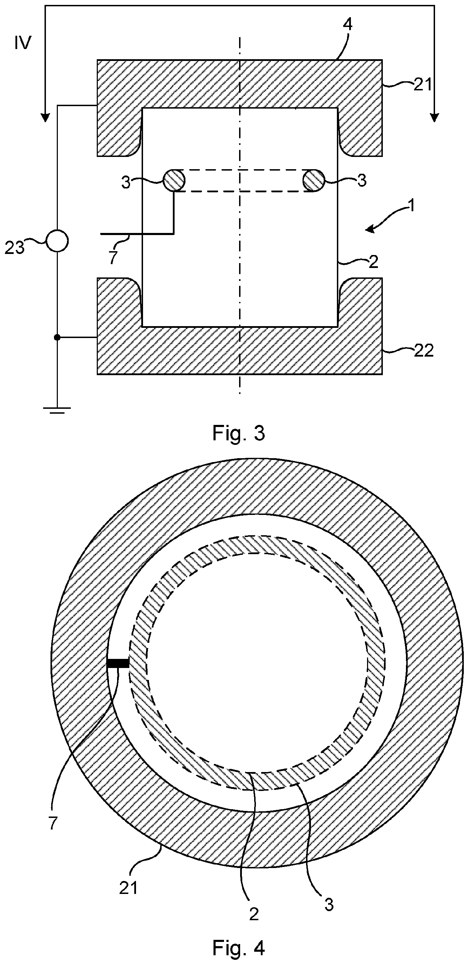

Figure 3 is an axial section of an insulating component 1 according to an embodiment, not covered by claims.

A cylindrical shape is suggested by the vertical dash-dotted symmetry axis. For visibility, the insulating component 1 is not drawn to scale but has been compressed in the axial direction, which is vertical in figure 3. The insulating component 1 separates a first object 21 and a second object 22, between which the axial direction extends. The first and second objects 21, 22 have respective electric potentials *V*₁, *V*₂ differing by a non-oscillating difference voltage *U* = *V*₂ - *V*₁. Either the first and second potentials are constant with respect to time (DC voltages), or they vary slowly enough for inductive phenomena to be negligible or are oscillating but phase-synchronous so that the difference voltage U is constant or slowly varying. In figure 3, to illustrate, the second object 22 is at ground potential *V*₂ and a voltage source 23 applies a non-ground potential *V*₁ to the first object 21.

In figure 3, the first object 21 interfaces with a cylindrically shaped solid insulator 2 of the insulating component 1 via a first conductive fitting, which surrounds and retains an uppermost portion of the lateral surface of the solid insulator 2. It is noted that the converse relationship, i.e., that a portion of the first object 21 is surrounded by the solid insulator 2, constitutes an advantageous embodiment within the scope of the present disclosure. The conductive fitting, which may be a metallic flange, is at uniform potential over its entire surface in representative (equilibrium) conditions. Further, a circular central recess of the fitting abuts with an axial surface of the solid insulator 2. Accordingly, the union of the axial surface and the uppermost portion of the lateral surface of the solid insulator 2 rests against the first object 21 and therefore can be identified, based on its function, as an abutment surface 4 of the insulating component 1. The lower boundary of the uppermost portion, which delimits the uppermost portion and the (lower) remainder of the lateral surface, and which is also a boundary of the abutment surface 4, is a circle. It is understood that the insulating component 1 is immersed in air or gas at atmospheric or super-atmospheric pressure; in particular, the insulating component may be immersed in pressurized SF₆. Because of the presence of the surrounding gas, each point on the circle is a triple point as far as the insulation problem is concerned.

To avoid an excessive field concentration at the triple point, an annular field-control electrode 3 is provided in the vicinity of the abutment surface 4. A generally preferred location of the field-control electrode 3 is the vicinity of a boundary of the abutment surface 4. In the geometry shown in figure 3, with respect to the axial direction, the field-control electrode 3 is arranged with a uniform spacing from the boundary of the abutment surface, axially somewhat further away from the first object 21 than the boundary of the abutment surface 4. This may be approximately the area where, if no field-control electrode was provided, the potential at the surface of the solid insulator 2 would begin to transition from the first potential *V*₁ to the second potential *V*₂. Instead, when an electrode potential *Vₑ* approximately equal to the first potential *V*₁ is applied to the field-control electrode 3 by means of a connection terminal 7, such transition is delayed in the sense that the potential at the surface of the solid insulator 2 remains approximately constant over a longer axial distance, and the main portion of the transition is shifted away from the first object 21, i.e., downward in figure 3.

A fitting of the second object 22 interfaces in a similar fashion with the opposite, lower end of the solid insulator 2. A further field-control electrode (not shown) may be arranged similarly at the opposite end and provide a corresponding field-homogenizing effect.

Figure 4 is drawn in a transversal plane through said uppermost portion of the lateral surface of the solid insulator 2. The contour of the field-control electrode 3, which is located lower than this plane, has been suggested by dashed lines. Though not drawn exactly to scale, figure 4 illustrates that the field-control electrode 3 is preferably arranged at uniform depth into the solid insulator 2, as seen from its lateral surface. Arranging the field-control electrodes 3 at moderate depth favours efficiency since the field-homogenizing effects of the field-control electrode 3 will then be most significant near the surface, where the triple point is located. The exact depth may be determined in view of insulation considerations, the desire to minimize leak currents, avoid partial discharges or breakdown.

Figure 4 furthermore illustrates the snug fit with the flanged surrounding portion of the first object 21, which may serve to retain the solid insulator 2 frictionally, while transferring any axial or torsional forces. To make the insertion of the solid insulator 2 into the flanged portion easy during assembly, the latter may have a slightly conical inner shape. Such shape may be not be preferred from the point of view of the insulation problem, insofar that it leaves a sharply pointed air wedge extending up to the triple point, which may lead to an extreme electric field concentration. By homogenizing the field using the field-control electrode 3, the designer need not refrain from a mechanically advantageous geometry of the type illustrated.

As an alternative, the solid insulator 2 and the first object 21 may be joined by means of shrink-fitting, by application of an adhesive composition, or by having a form-locking (positive-fit) external geometry.

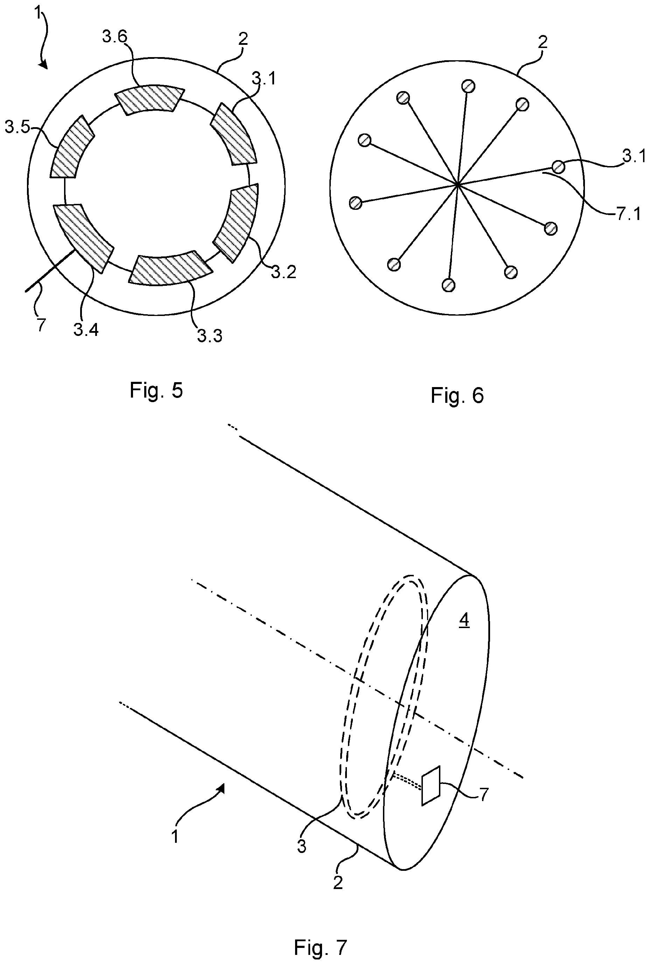

Figure 5 is a transversal section of an insulating component 1 according to a different embodiment, not covered by claims. Multiple field-control electrodes 3.1, 3.2, 3.3, 3.4, 3.5, 3.6, through which the plane of the figure passes, are embedded in the solid insulator 2. The field-control electrodes 3.1, 3.2, 3.3, 3.4, 3.5, 3.6 are shaped as circular segments. The interruptions between the circular segments may help conserve electrode material without a significant deterioration of the field-homogenizing effect, at least if the width of each interruption is of same order of magnitude as the depth from the lateral surface. A connection terminal 7 allows an electrode potential *Vₑ* to be applied to the field-control electrodes 3.1, 3.2, 3.3, 3.4, 3.5, 3.6. In figure 5, the connection terminal 7 extends from one of the field-control electrodes 3.4, which is connected to the remaining field-control electrodes 3.1, 3.2, 3. 3, 3.5, 3.6 sequentially. Alternatively, a separate connection terminal is arranged for each field-control electrode or each sub-group of field-control electrodes.

Figure 6 shows a variation of the embodiment depicted in figure 5. Here, each field-control electrode 3.1 is point-shaped as seen in the plane of the drawing and connects to the others via a connection line 7.1 leading up to a central node. From the central node, a connection terminal (not shown) extends out of the solid insulator 2 to allow application of an electrode potential *Vₑ*. Compared to the geometry of figure 5, the present embodiment further reduces the amount of electrode material needed to manufacture the insulating component 1. If it is deemed acceptable, from the point of view of a use case, that the potential at the surface of the solid insulator varies moderately in the tangential direction, the present embodiment has an equivalent field-homogenizing capability at the triple point (in terms, e.g., of reduction of the maximum field concentration) as the embodiments discussed above.

Figure 7 is a perspective view of a cylindrically shaped insulating component 1, which is similar to the embodiment illustrated in figures 3 and 4, with an annular embedded field-control electrode 3 suggested by dashed lines. In the present embodiment, not covered by claims, , the insulating component 1 is provided with a connection terminal 7 extending from the field-control electrode 3 to the axial abutment surface 4 of the insulating component 1. When the insulating component 1 rests axially against a conductive object, a connection terminal 7 with this placement will also interface electrically with the conductive object, thereby ensuring that the field-control electrode 3 is at equal electric potential. If the connection terminal 7 of the insulating component 1 shown in figure 3 was modified in this manner, then *Vₑ* = *V*₁ would apply whenever the insulated component was received in the fitting of the first object 21.

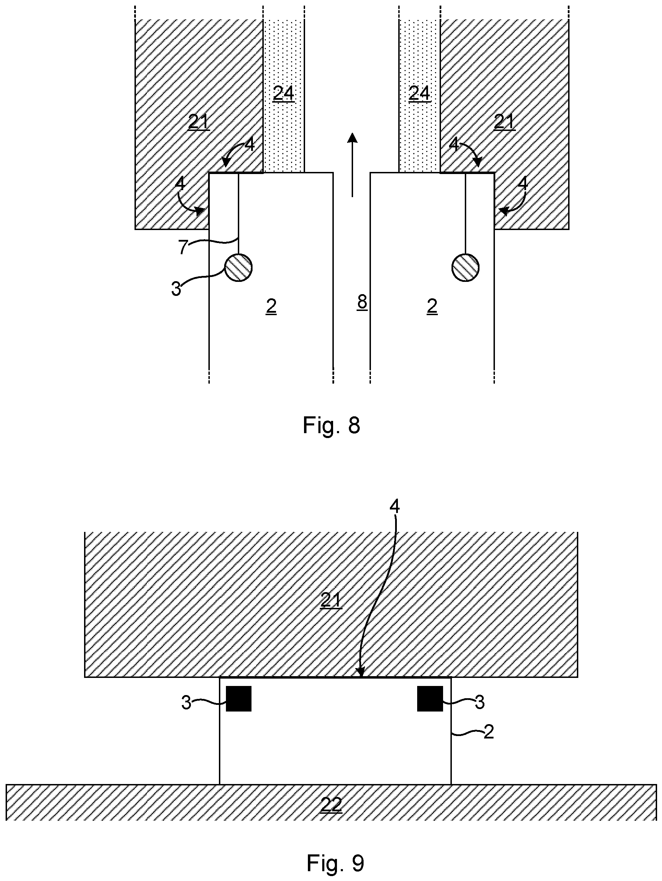

Figure 8 is an axial section of the upper portion of an insulating component 1 with a tube-shaped insulator 2, which defines a fluid channel 8 that extends in the axial direction and is located at an approximate centre of the insulator 2. The insulating component 1 is shown received in a recess of a first object which surrounds an upper portion of a lateral surface of the insulator 2. Starting from the edges of the recess and going inwards, the axial surface of the insulator 2 interfaces with three concentric regions of the first object: a conductive portion 21 at a first potential *V*₁, an insulating portion 24 and a central channel. The conductive portion 21 maybe a metallic housing, connection sleeve or the like, which exerts lateral (in particular radial) compressive forces on the insulator 2. By the approximately concentric relative arrangement, fluid leaving the channel 8 of the insulating component 1 enters the central channel of the first object. It is noted that no cylindrical symmetry is assumed and that, in place of the illustrated diameter ratio, the diameter of the fluid channel 8 may be greater than the diameter of the central channel or equal to this. In the present embodiment, the abutment surface 4 is composed of the outermost portion of the axial surface of the insulator 2 and the uppermost portion of the lateral surface thereof. A triple point is located in the corner where the conductive portion 21, the insulator 2 and the surrounding gas phase meet.

Field-control electrodes 3 are embedded in the insulator 2 slightly below the lower boundary of the abutment surface 4, that is, with a somewhat greater axial separation from the first object than the lower boundary. The field-control electrodes 3 are maintained at a potential equal to the potential of the conductive portion 21 when the insulating component 1 is received in the recess. More precisely, a portion of the connection terminal 7 is exposed at the axial surface. In the illustrated, received position of the insulating component 1, the exposed portion of the connection terminal 7 makes electric contact with the conductive portion 21 of the first object. This serves to homogenize the electric field at the triple point, as explained above.

Figure 9 shows, according to an embodiment, an insulating component in abutment with flat surfaces of a first 21 and second 22 object. Unlike the embodiments discussed with reference to the preceding figures, the present insulating component is not surrounded by either the first 21 or second 22 object. Instead, the shown insulating component serves as a spacer or support allowing the first object 21 to rest under the action of gravity on top of the second object 22 while maintaining electric separation. The abutment surface 4 corresponds to the upper axial surface of the solid insulator 2. A plurality of field-control electrodes 3 are embedded below the abutment surface 4 near the lateral surface of the solid insulator 2. The field-control electrodes 3, which may have a rectangular or differently shaped cross section, can be maintained approximately at the potential of the first object 21 to avoid an excessive a field concentration at the triple point. Cylindrical symmetry may exist but is optional in the present embodiment.

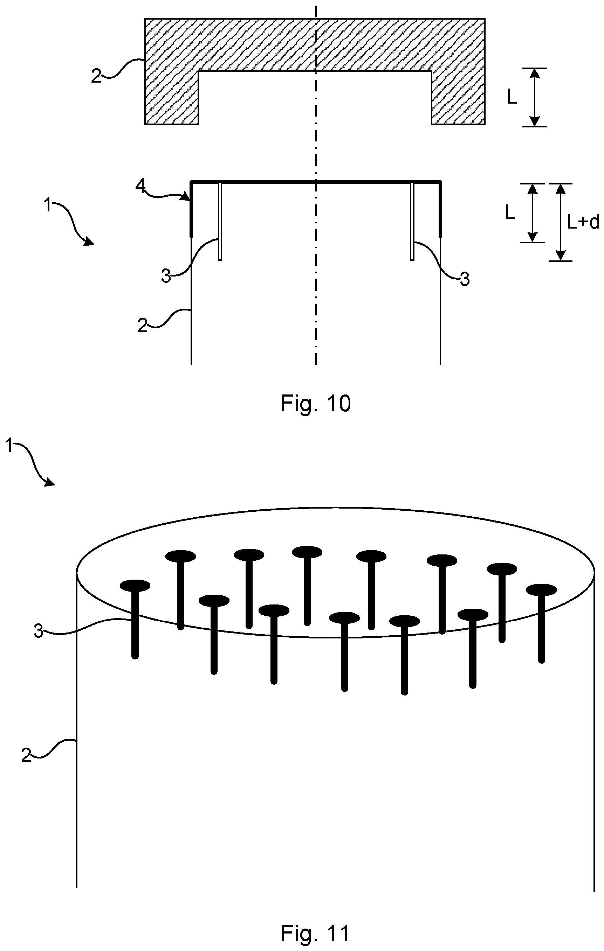

Figure 10 is an axial section of an upper portion of an insulating component 1 according to the invention. A cylindrical shape is suggested by the vertical dash-dotted symmetry axis. The insulating component 1 is suitable for separating a first object and a second object at its respective axial ends. For visibility, only first object 21 and the upper portion of the insulating component 1 are shown in a separated position in figure 10. The first and second objects have respective electric potentials *V*₁, *V*₂ differing by a non-oscillating difference voltage *U* = *V*₂ - *V*₁. Either the first and second potentials are constant with respect to time (DC voltages), or they vary slowly enough for inductive phenomena to be negligible or are oscillating but phase-synchronous so that the difference voltage U is constant or slowly varying. As an example, the second object may be at ground potential *V*₂ = 0 and a voltage source may apply a non-ground potential *V*₁ to the first object 21.

In figure 10, the first object 21 is adapted to interface with a cylindrically shaped solid insulator 2 of the insulating component 1 via a first conductive fitting, which surrounds and retains an uppermost portion of the lateral surface of the solid insulator 2. The conductive fitting, which may be a metallic flange, is at uniform potential over its entire surface in representative (equilibrium) conditions. Further, a circular central recess of the fitting abuts with an axial surface of the solid insulator 2. Accordingly, the union of the axial surface and the uppermost portion (L units of length) of the lateral surface of the solid insulator 2 rests against the first object 21 and therefore can be identified, based on its function, as an abutment surface 4 of the insulating component 1. The lower boundary of the uppermost portion, which delimits the uppermost portion and the (lower) remainder of the lateral surface, and which is also a boundary of the abutment surface 4, is a circle. It is understood that the insulating component 1 is immersed in air or gas at atmospheric or super-atmospheric pressure; in particular, the insulating component may be immersed in pressurized SF₆. Because of the presence of the surrounding gas, each point on the circle is a triple point as far as the insulation problem is concerned.

To avoid an excessive field concentration at the triple point, a plurality of field-control electrodes 3 extend axially (downward in figure 10) from the axial portion of the abutment surface 4. The depicted insulating component 1 includes a plurality of field-control electrodes 3 distributed around the lateral surface of the insulator 2, from which two field-control electrodes 3 fall within the plane of the drawing. The field-control electrodes 3 are arranged with a uniform spacing from the lateral surface. The field-control electrodes 3 extend an axial distance L + d with d *>* 0, that is, somewhat further from the first object 21 than the boundary of the abutment surface 4, which is located at a distance L. This may be approximately the area where, if no field-control electrode was provided, the potential at the surface of the solid insulator 2 would begin to transition from the first potential *V*₁ to the second potential *V₂.* Instead, when an electrode potential *Vₑ* approximately equal to the first potential *V*₁ is applied to the field-control electrodes 3 by means of a connection terminal (not shown), such transition is delayed in the sense that the potential at the surface of the solid insulator 2 remains approximately constant over a longer axial distance, and the main portion of the transition is shifted away from the first object 21, i.e., downward in figure 10.

A fitting of the second object may interface in a similar fashion with the opposite, lower end of the solid insulator 2. A further plurality of field-control electrodes (not shown) may be arranged similarly at the opposite end and provide a corresponding field-homogenizing effect.

Figure 11 is a perspective view of an end portion of the insulating component 1 which has been described above with reference to figure 10. It is seen that the field-control electrodes 3 extend an axial distance L+d from openings that are uniformly distributed over a circle on the axial surface. The circle may be approximately concentric with the circumference of the axial surface, i.e., at uniform distance from the circumference. The field-control electrodes 3 may be metallic rods or pins, which have been inserted into the openings, or may be formed by a material that has been introduced into axial holes drilled from said openings. The material is preferably conductive in the sense that its resistivity is well below that of the insulator 2. The downward ends of the field-control electrodes 3 preferably have rounded or otherwise smoothly shaped tips, to reduce the electric stress. Preferably, all parts of the field-control electrodes 3 have a least radius of curvature selected in view of an operating voltage for which the insulating component 1 is designed.

Arranging the field-control electrodes 3 at moderate distance from the circumference favours efficiency since the field-homogenizing effects of the field-control electrodes 3 will then be most significant near the lateral surface, where the triple point is located. The exact depth may be determined in view of insulation considerations, the desire to minimize leak currents, avoid partial discharges or breakdown.

The inventors anticipate that insulating components according to the present disclosure are useful as HVDC insulators. Such insulators are industrially applied in HVDC converters valve halls, DC gas-insulated substations, compact gas-insulated HVDC converters, HVDC breakers and similar equipment.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. An insulating component (1) for separating a first object (21) at a first potential and a second object (22) at a second potential differing by a non-zero non-oscillating voltage from the first potential,
the insulating component comprising an insulator (2) with an abutment surface (4) adapted to rest against said first object,
**characterized by** a plurality of field-control electrodes (3) to be maintained approximately at the first potential, which are embedded in the solid insulator in the vicinity of the abutment surface, wherein the insulator is tube-shaped, with a cylindrical shape, and the abutment surface comprises at least an axial surface, and wherein the field-control electrodes extend axially into the insulator from the axial portion of the abutment surface, and wherein the field-control electrodes are distributed along a lateral circumference of the insulator.

2. The insulating component (1) of claim 1, wherein the plurality of field-control electrodes are distributed about the abutment surface.

3. The insulating component (1) of claim 2, wherein the plurality of field-control electrodes have a uniform spacing from a boundary of the abutment surface.

4. The insulating component (1) of any of the preceding claims, wherein the plurality of field-control electrodes are embedded at uniform depth into the insulator, preferably at uniform lateral depth into the insulator.

5. The insulating component (1) of any of the preceding claims, wherein the field-control electrodes extend axially beyond the abutment surface.

6. The insulating component (1) of any of the preceding claims, wherein the abutment surface comprises at least one lateral surface adapted to be retained by a fitting.

7. The insulating component (1) of any of the preceding claims, wherein the field-control electrodes are connected to at least one connection terminal (7).

8. The insulating component (1) of claim 7, wherein the connection terminal is arranged to connect the plurality of field-control electrodes and the first object when the abutment surface rests against the first object.

9. The insulating component (1) of any of the preceding claims, further comprising at least one fluid channel (8).

10. The insulating component (1) of any of the preceding claims, further comprising an external shielding electrode arranged in the vicinity of the endpoints of the field-control electrodes.

11. The insulating component (1) of any of the preceding claims, wherein the insulator (2) is one in the group comprising: solid insulator, polymeric insulator, fibre-reinforced insulator, powder-filled insulator.

## Patentansprüche

1. Isolierkomponente (1) zum Trennen eines ersten Objekts (21) auf einem ersten Potenzial und eines zweiten Objekts (22) auf einem zweiten Potenzial, das sich durch eine von null verschiedene, nicht oszillierende Spannung von dem ersten Potenzial unterscheidet,
wobei die Isolierkomponente einen Isolator (2) mit einer Anliegefläche (4), die dafür ausgelegt ist, an dem ersten Objekt anzuliegen, aufweist,
**gekennzeichnet durch** mehrere Feldsteuerungselektroden (3), die ungefähr auf dem ersten Potenzial zu halten sind und in den Festkörperisolator in der Nähe der Anliegefläche eingebettet sind, wobei der Isolator rohrförmig mit zylindrischer Form ist und die Anliegefläche wenigstens eine axiale Fläche aufweist, wobei sich die Feldsteuerungselektroden von dem axialen Abschnitt der Anliegefläche axial in den Isolator erstrecken und wobei die Feldsteuerungselektroden längs eines seitlichen Umfangs des Isolators verteilt sind.

2. Isolierkomponente (1) nach Anspruch 1, wobei die mehreren Feldsteuerungselektroden um die Anliegefläche verteilt sind.

3. Isolierkomponente (1) nach Anspruch 2, wobei die mehreren Feldsteuerungselektroden einen gleichmäßigen Abstand von einem Rand der Anliegefläche haben.

4. Isolierkomponente (1) nach einem der vorhergehenden Ansprüche, wobei die mehreren Feldsteuerungselektroden in einer gleichmäßigen Tiefe im Isolator, vorzugsweise in einer gleichmäßigen seitlichen Tiefe im Isolator, eingebettet sind.

5. Isolierkomponente (1) nach einem der vorhergehenden Ansprüche, wobei sich die Feldsteuerungselektroden axial über die Anliegefläche hinaus erstrecken.

6. Isolierkomponente (1) nach einem der vorhergehenden Ansprüche, wobei die Anliegefläche wenigstens eine seitliche Fläche aufweist, die dafür ausgelegt ist, durch ein Montagebauteil gehalten zu werden.

7. Isolierkomponente (1) nach einem der vorhergehenden Ansprüche, wobei die Feldsteuerungselektroden mit wenigstens einem Verbindungsanschluss (7) verbunden sind.

8. Isolierkomponente (1) nach Anspruch 7, wobei der Verbindungsanschluss dafür ausgelegt ist, die mehreren Feldsteuerungselektroden und das erste Objekt zu verbinden, wenn die Anliegefläche an dem ersten Objekt anliegt.

9. Isolierkomponente (1) nach einem der vorhergehenden Ansprüche, die ferner wenigstens einen Fluidkanal (8) aufweist.

10. Isolierkomponente (1) nach einem der vorhergehenden Ansprüche, die ferner eine äußere Abschirmungselektrode aufweist, die in der Nähe der Endpunkte der Feldsteuerungselektroden angeordnet ist.

11. Isolierkomponente (1) nach einem der vorhergehenden Ansprüche, wobei der Isolator (2) einer in der Gruppe ist, die umfasst: Festkörperisolator, Polymerisolator, faserverstärkter Isolator, pulverbefüllter Isolator.

## Revendications

1. Composant isolant (1) pour la séparation d'un premier objet (21) à un premier potentiel et un deuxième objet (22) à un deuxième potentiel différant du premier potentiel par une tension non oscillante non nulle,
le composant isolant comprenant un isolant (2) comportant une surface de butée (4) conçue pour reposer contre ledit premier objet,
**caractérisé par** une pluralité d'électrodes de commande de champ (3) pour être maintenu approximativement au premier potentiel, qui est incorporée dans l'isolant solide à proximité de la surface de butée, l'isolant étant en forme de tube, doté d'une forme cylindrique, et la surface de butée comprenant au moins une surface axiale, et les électrodes de commande de champ s'étendant axialement dans l'isolant depuis la partie axiale de la surface de butée, et les électrodes de commande de champ étant distribuées le long d'une circonférence latérale de l'isolant.

2. Composant isolant (1) selon la revendication 1, la pluralité des électrodes de commande de champ étant distribuées autour de la surface de butée.

3. Composant isolant (1) selon la revendication 2, la pluralité des électrodes de commande de champ ayant un espacement uniforme par rapport à une limite de la surface de butée.

4. Composant isolant (1) selon l'une quelconque des revendications précédentes, la pluralité d'électrodes de commande de champ étant incorporée à une profondeur uniforme dans l'isolant, préférablement à une profondeur latérale uniforme dans l'isolant.

5. Composant isolant (1) selon l'une quelconque des revendications précédentes, les électrodes de commande de champ s'étendant axialement au-delà de la surface de butée.

6. Composant isolant (1) selon l'une quelconque des revendications précédentes, la surface de butée comprenant au moins une surface latérale conçue pour être retenue par un raccord.

7. Composant isolant (1) selon l'une quelconque des revendications précédentes, les électrodes de commande de champ étant connectées à au moins une borne de connexion (7).

8. Composant isolant (1) selon la revendication 7, la borne de connexion étant agencée pour connecter la pluralité des électrodes de commande de champ et le premier objet lorsque la surface de butée repose contre le premier objet.

9. Composant isolant (1) selon l'une quelconque des revendications précédentes, comprenant en outre au moins un canal de fluide (8).

10. Composant isolant (1) selon l'une quelconque des revendications précédentes, comprenant en outre une électrode de blindage externe agencée à proximité des extrémités des électrodes de commande de champ.

11. Composant isolant (1) selon l'une quelconque des revendications précédentes, l'isolant (2) étant l'un dans le groupe comprenant : un isolant solide, un isolant polymérique, un isolant renforcé par des fibres, un isolant rempli de poudre.
